(19) **Europäisches Patentamt**

**European Patent Office**

**Office européen des brevets**

(11) **EP 1 101 561 B1**

(12) **EUROPEAN PATENT SPECIFICATION**

(45) Date of publication and mention
of the grant of the patent:
**08.02.2006 Bulletin 2006/06**

(51) Int Cl.:
*B23K 26/067* (2006.01)    *B23K 26/36* (2006.01)
*B41C 1/05* (2006.01)    *B44C 1/22* (2006.01)

(21) Application number: **00124847.5**

(22) Date of filing: **14.11.2000**

(54) **Method and apparatus for engraving a liquid transfer cylindrical roll with laser beams**

Gravierverfahren und -vorrichtung für eine Flüssigkeitsübertragungsrolle mit Laserstrahlen

Méthode et appareil de gravure d'un rouleau de transfert pour liquide avec des rayons laser

(84) Designated Contracting States:
**AT BE CH CY DE DK ES FI FR GB GR IE IT LI LU MC NL PT SE TR**

(30) Priority: **15.11.1999 US 439996**

(43) Date of publication of application:
**23.05.2001 Bulletin 2001/21**

(73) Proprietor: **Praxair S.T. Technology, Inc.
Danbury,
Connecticut 06810-5113 (US)**

(72) Inventor: **Olejniczak, Brian Lee
Naperville,
Illinois 60540 (US)**

(74) Representative: **Schwan, Ivo et al
Schwan Schwan Schorer
Patentanwälte
Bauerstrasse 22
80796 München (DE)**

(56) References cited:
EP-A- 0 807 484     WO-A-95/05944
US-A- 5 236 763     US-A- 5 748 222

• **PATENT ABSTRACTS OF JAPAN vol. 016, no. 331 (M-1282), 20 July 1992 (1992-07-20) & JP 04 094881 A (NIHON DENKI REEZA KIKI KK), 26 March 1992 (1992-03-26)**

## Description

The present invention relates to a method of engraving a liquid transfer cylindrical roll according to the preamble of claim 1 and an apparatus for engraving a solid article according to the preamble of claim 5 (see, for example, US-A-5 236 763).

Background Art

Liquid transfer articles have numerous applications, including without limitation, as plates or rolls for printing, metering plates or rolls for offset printing, flexography or gravure, or plates and rolls for applying liquid such as ink, lacquer or liquid resin to surfaces to be coated with such liquids. In all cases the liquid or ink to be transferred is held in a plurality of cells engraved in the surface of the plate or roll with the amount of liquid to be transferred depending on the number, size and depth of the cells per unit area of the engraved surface. In practice, the cells are formed close together in a definite pattern of parallel lines of cells. In the case of a cylinder they are preferably formed in a continuous spiral on the cylindrical surface. While the engraved surface can be in the form of a plate, by far the most common and usual form is that of a cylinder having a continuous spiral of cells engraved on its surface. The spiral of cells is engraved so that a plurality of parallel lines of cells are produced all forming the same angle (usually called the screen angle) with a surface line parallel to the longitudinal axis of the cylinder or roll, which angle may be from about 0° to 90°, for example, 30° or 60° but more commonly 45°.

While a variety of engraved surfaces are used for transferring liquid, ceramic and metal carbide surfaces, because of their extreme hardness and consequent excellent wear resistance, are generally used for liquid transfer. Because of their hardness, however, the only practical method of engraving such surfaces has been by means of a laser beam. Although continuous laser beams are used for engraving some surfaces, the pulsed laser beam is much more commonly employed as it lends itself to the production of discreet cells in the engraved surface. The cells which are formed are of specific diameter and depth and can be used to meter liquids with a high degree of accuracy and predictability.

In one prior art method each pulse of the laser beam produces one cell. In producing the cell, however, the pulse also produces a raised portion (i.e. above the original surface of the roll) called "recast" around the periphery of each cell which is generally annular in shape but of irregular width and height. When the pulse of laser light is focused onto the roll's surface, the ceramic material is vaporized and ejected from the rolls surface. During this process some of the ejected material re-solidifies around the rim of the cells producing an appearance of a crater. This rim of resolidified material, is the recast.

The recast makes it impossible by conventional methods to reduce the distance between cells along the spiral engraving line to less than about twice that along a line perpendicular to the longitudinal axis of the cylindrical roll. The recast may be partially or entirely eliminated by polishing of the engraved roll. Because of the irregularity in the height of the recast, movement of liquid between adjacent cells is possible if no after-polishing or insufficient polishing to reduce the recast to flat lands between the cells is undertaken. When it is possible for liquid to pass between adjacent cells this type of structure is termed "an open cell structure". When sufficient polishing is effected to produce flat lands of recast of the same height above the original surface or to the original surface itself, then the cells become closed as the movement of liquid between them is no longer possible. This is referred to as a closed cell structure, which is preferred.

Recast is usually irregular in shape and is typically jagged with sharp peaks. These characteristics cause many problems in addition to those already described. For example, in a printing press a blade of plastic or metal is used to remove excess ink from an inking roll surface prior to metering the ink to the rest of the process. These blades can be prematurely worn or damaged by the irregularities of the recast. The blade material can also end up being deposited in the cells of the inking roll, causing inconsistent metering of ink from the roll. Another problem concerns the esthetic quality of the engraving. The irregularities of the recast give many engravings a rough "unfinished" look and poor symmetry to the cells. This causes the overall appearance of the engraved patterns to be inconsistent across the rolls surface.

Examples of laser beam engraving of liquid transfer articles can be found in U.S. Patent Nos.: 4,108,659 to Dini, 4,504,354 to George et al., 4,566,938 to Jenkins et al., 5,093,180 to Morgan, and 5,143,178 and 5,236,763 to Luthi.

US-A-5 236 763 discloses a method for engraving a series of consecutive cells in a solid surface, such as a liquid transfer surface, by impinging on the surface a pulsed laser beam in which the pulses of the laser beam are formed in a series of consecutive groups of two or more consecutive pulses and each of said groups forms an individual cell in the solid surface.

In WO-A-9505944 there is described a laser printer which uses a print engine for forming an image on a print medium. The print engine splits a light beam into a plurality of dispersed light beams of equal intensity. The dispersed beams are collimated and focused onto the print medium to form a pixel image.

Furthermore, JP-A-04094881 discloses a laser marking device in which a half mirror is used to divide the laser beam so as to enlarge the line width of the marking by two times and hence to drastically reduce the time for processing.

It has been found that many of these problems can be avoided by re-engraving an area on the roll's surface that had already been engraved. Re-engraved (at least twice engraved) cells can be made much more symmetrical and the recast can be smoothed and rounded.

This should also permit the cell walls from cell-to-cell to be made thinner and smoother. The bottoms of the cells should also be smoother and more open. The depth of the cells can be 20 to 30% or more, deeper than cells "hit" by a laser beam only a single time.

This re-engraving process overcomes many of the problems associated with the conventional one hit engraving process. One re-engraving process of the prior art is described in the Luthi patents set forth above. In this process the pulses of the laser beam are formed in a series of consecutive groups with each group comprising two or more consecutive spaced apart pulses. The impingement of each group of pulses on the solid surface being engraved forms an individual cell in the liquid transfer article.

Other methods are known for re-engraving. One approach is to engrave the roll a first time and then return the focusing optics to their starting point. The entire roll is then engraved over again. One difficulty with this approach is to ensure proper registration or overlap between the first and second engravings.

Further, the process is slow and costly since the engraving process must be repeated twice to produce the final re-engraved roll.

Another approach uses conventional refractive optical elements to split a laser beam into two beams having a separate focus spot for each beam. By adjusting mirrors in the optical path of this approach, the second focus spot can be positioned onto a previously engraved cell. This approach requires a controller to position the mirrors as the engraving patterns are changed. It typically uses two beam splitters which can produce a 50% loss of energy because the second beam splitter splits the energy of the two beams a second time. Most commercial lasers would not have sufficient power to tolerate such a 50% loss in power without slowing the engraving processing speed for the liquid transfer rolls. Refracting the two laser beams through a common focusing lens using this technique can also cause distortion of the beams' shape which can cause the engraved cells to be slightly elliptical in shape instead of round as desired. This approach is also very expensive, costing as much as $60,000.00 for the laser machining device and as much as $50,000.00 for the controller and software to operate it.

Yet another approach uses an acousto-optic modulator to modulate a continuous beam of laser energy to re-engrave a cell. For example, a cell is engraved by the laser beam and then the beam is deflected to the next cell position on the rolls circumference to engrave that cell. Then the beam is deflected back to the original cell which is hit a second time. The process is then repeated around the roll circumference. This approach is not believed to produce the desired quality of roll engraving which is possible with the other approaches. The ceramic materials commonly used for anilox rolls, for example, are poor conductors of heat. It has been found that the initially engraved cell needs time to cool and completely re-solidify to take full advantage of the second "hit". This approach does not provide sufficient time for proper cooling, reducing the quality as compared with other re-engraving processes. This system is also very expensive costing as much as $90,000.00 each.

The beam splitting and beam modulating systems also have limited retrofitability with many of the existing engraving machines. The physical size and necessary beam characteristics of these machines usually requires significant modifications of the machines at high cost in order to retrofit such systems into the machines.

It would be highly desirable to find a re-engraving process which has improved efficiency and throughput without decreasing the quality of the engraved product. As will be described hereafter, the present invention achieves these improvements at significantly lower cost than prior art approaches by using an optical system employing a diffractive optical element.

Diffractive optical elements or binary gratings have found various applications as described in certain patents and publications as follows:

- U.S. Patent Nos.: 4,436,398 to Endo et al., 5,786,560 to Tatah et al. and 5,914,814 to Ang.
- Diffractive Optics Move Into The Commercial Arena, by M. R. Feldman, which appeared in the October 1994 edition of Laser Focus World, published by PennWell Publishing Co.;
- Diffractive Optics Improve Product Design, by M. R. Feldman et al., which appeared in the September 1995 issue of Photonics Spectra, published by Laurin Publishing Co., Inc.;
- Laser Beam Shapes For The Future, by G. Sharp, et al., which appeared in the December 1994 edition of Industrial Laser Review, published by PennWell Publishing Co.; and
- Binary Optics: New Diffractive Elements For The Designer's Tool Kit, by A. Kathman, which appeared in the September 1992 issue of Photonics Spectra, published by Laurin Publishing Co., Inc.

In particular the Endo, et al. and Tatah, et al. patents and publication #2 point out, for example, that diffractive optics can convert a single laser beam into several output beams. They do not show, however, the use of diffractive optics for providing split beams for engraving and re-engraving, particularly for making a liquid transfer article.

Summary of the Invention

The present invention relates to a method of engraving a liquid transfer cylindrical roll according to claim 1 and an apparatus for engraving a solid article according to claim 5.

In accordance with a preferred embodiment of the invention, a laser beam is generated, preferably a pulsed laser beam. The laser beam is split into at least two beams, with each of the beams forming a focused spot at the surface. The focused spots are spaced apart from each other. The beams form at least a beam pair with each pair of the beams being arranged to simultaneously engrave a new cell with the focused spot of a first of the beam pair and re-engrave a previously engraved cell with the focused spot of a second of the beam pair. The splitting of the original laser beam is accomplished by passing the laser beam through an optical device having a diffractive optical element to form at least, the first beam and the second beam having the spaced apart focused spots. The process employs the split beams to engrave and re-engrave a plurality cells in the surface of the article.

In a further preferred embodiment more than two beams are formed so that for every split beam which is engraving a new cell there is another split beam which is re-engraving a previously engraved cell. The processes of this invention are particularly useful for making liquid transfer articles which have numerous applications as described above.

Each cell defines an opening in the surface of the article having a first central axis and a second central axis normal to the first axis, the axes intersecting at a center axis point. The engraving step comprises engraving the cells arranged in at least two rows, in which a line drawn through the first axes of the cells in one row is substantially parallel to a line drawn through the first axes of the cells in an adjacent row; and wherein at least a portion of the cells in a row each have their second axes aligned between the second axes of two spaced-apart cells in an adjacent row. The length of the non-engraved spacing between two cells in a row along a line containing their first axes is between 1 to 1.3 times the length of a non-engraved spacing between one of the cells in the row and an adjacent cell in an adjacent row, along a line containing the center axis points of the cells. The cells are aligned so that a line drawn through the center axis point of a cell in one row and through a center axis point of an adjacent cell in an adjacent row forms an angle of between greater than 0° and less than 90° with a line drawn parallel to the longitudinal axis of the cylindrical article. Most preferably the angle is between greater than 60° and less than 90°.

In a particularly preferred embodiment the cells are arranged substantially equally distant from each other; and the length of the non-engraved spacing between two cells in a row along a line containing their first axes is substantially equal to the length of the non-engraved space between one of the cells and an adjacent cell in an adjacent row along a line containing the center axis points of the cells.

Preferably the diffractive optical element is formed of a material which is transparent to the laser beam. Advantageously the wavelength is from 0.1 to 15$\mu$m (micrometers or microns) and most advantageously from 1 to 15$\mu$m. Most preferably the wavelength of the laser beam is 10.6$\mu$m.

In accordance with an alternative embodiment of the invention, an apparatus is provided for engraving a solid article to provide on at least a portion of a surface of the article a plurality of spaced-apart engraved cells. The apparatus includes a laser beam generator for generating a laser beam. Preferably the laser beam which is generated is a pulsed laser beam. An optical device having a diffractive optical element is provided for splitting the laser beam into at least two beams, with each of the beams forming a focused spot at the surface. The diffractive optical element is arranged along the axis of the laser beam as generated for splitting the beam into at least two beams which are then passed through a refractive lens to provide the focused spots at the surface. Each of the beams is spaced apart from the other beams. The optical device forms the beams into pairs with each pair of the beams being arranged for simultaneously engraving a new cell with the focused spot of a first of the beam pair and re-engraving a previously engraved cell with the focused spot of a second of the beam pair. Means are provided for using each beam pair to engrave and re-engrave a plurality of cells in the surface of the article. Preferably the article engraved by the apparatus by the apparatus defined in claim 5 is a liquid transfer cylindrical roll.

Preferably the optical device provides more than two beams and for every split beam for engraving a new cell there is provided another split beam for re-engraving a previously engraved cell.

Preferably the diffractive optical element is formed of a material which is transparent to the laser beam.

The product produced by the process of this invention also comprises a preferred embodiment of the invention.

It is therefore an object of the present invention to provide a re-engraving process which has improved efficiency and throughput without decreasing the quality of the engraved product.

It is another object of the present invention to provide such a process which uses a diffractive optic device to split a laser beam of the engraving apparatus.

It is another object of the present invention to provide an improved re-engraving apparatus for carrying out the re-engraving process which uses a diffractive optic device to split the laser beam used for engraving.

It is another object of the present invention to produce a liquid transfer article by the process of the invention, having reduced manufacturing cost.

The above and further objects and advantages of this invention will become apparent upon consideration of the following description thereof.

Brief Description of the Drawings

Figure 1 is a schematic view of a laser engraving apparatus in accordance with a preferred embodiment of this invention.

Figure 2 is a schematic partial perspective view of an engraved surface of a product provided.

Figure 3 is a schematic view of the apparatus of Fig. 1 illustrating a preferred cell pattern which can be produced by the apparatus and process in accordance with the preferred embodiments of this invention.

Detailed Description

Although the present invention will be described with reference to the embodiments shown in the drawings it should be understood that the present invention may be embodied in many forms of alternative embodiments. In addition, any suitable size, shape or type of materials or elements could be used.

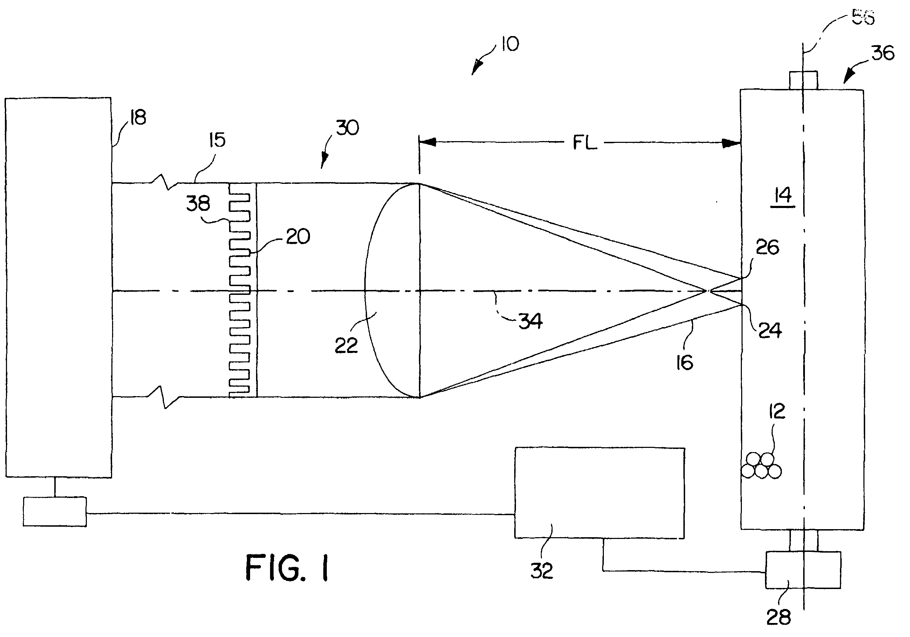

Referring to Fig. 1, this invention relates to a method and apparatus 10 for engraving and re-engraving a series of consecutive cells 12 in a solid surface 14 by impingement on the solid surface 14 of a laser beams 16 in relative motion with the surface 14. In particular, the present invention relates to the engraving and re-engraving of solid surfaces 14 by multiple laser beams 16 having spaced apart focus points 24 and 26 at the surface 14. The laser beams 16 having the spaced apart focus points 24 and 26 are formed from a single laser beam 15 provided by the laser generator 18 using a diffractive optical element 20 and refractive lens 22.

The relative movement of the laser beams focus points 24 and 26 and the surface 14 may be provided by any desired conventional means as are well known in the art. The laser generator 18 and optical system 30, or the surface 14, or some combination of them, could be moved, for example, by a computer controlled servo or stepping devices 28 and 29, to provide the relative movement which is required for engraving the cells 12. The mechanisms for traversing the working surface 14 under a laser beam are extremely well known and do not form part of this invention.

In accordance with a preferred embodiment of the invention, the laser beam which is generated is a pulsed laser beam. The optical device 30 includes a diffractive optical element 20 for splitting the laser beam 15 into at least two beams 16, with each of the beams 16 forming focused spots 24 or 26 or the like at the surface 14. Preferably the diffractive optical element 20 is arranged along the axis 34 of the laser beam 15 which is generated by the generator 18 and splits the beam into at least two beams which are then passed through a refractive lens 22 to provide the focused spots 24 and 26 at the surface 14. Preferably each of the beams 16 is spaced apart from each of the other beams 16. The Optical device 30 preferably forms the beams 16 into pairs with each pair of the beams 16 being arranged for simultaneously engraving a new cell 12 with the focused spot 22 of a first of the beam 16 pair and re-engraving a previously engraved cell 12 with the focused spot 24 of a second of the beam 16 pair. Preferably control means 32 are provided for utilizing each beam 16 pair to engrave and re-engrave a plurality cells 12 in the surface 14 of the article 36. Preferably the article 36 is a liquid transfer article.

Diffractive optical elements 20 (sometimes called a diffraction grating or a binary grating) are fully described in the patents and publications noted heretofore. A laser beam's (15) characteristics at any given image plane can be defined as the sum of the phase relationships of the photons that comprise the beam 15. By altering the phase relationships in the beam 15 with a diffractive optical element 20 the beam can be split into multiple beams 16 with little loss of power because the beam 15 energy is essentially rearranged to provide the resulting beams 16. A diffractive optical element 20 breaks up the incoming waves of light in the beam 15 into a large number of waves, which recombine and form new waves on the other side of the optical element 20. The new waves can move in a different direction than the incoming light. A diffractive optical element 20 can therefore convert a single beam 15 into several output beams 16. The diffractive optical element 20 breaks up the light wave or beam 15 by forcing it through a microscopic pattern that is typically etched into the surface of the diffractive element 20 using conventional photolithography.

The diffractive optical element 20 is designed to alter the incident beams' (15) phase relationship such that the focusing lens 22 produces at least two focus spots 24 and 26 of substantially equal intensity at a fixed separation to allow for one focus spot 24 to engrave cells 12 in a materials virgin surface 14 while the second focus spot 26 re-engraves the previously engraved cells 12, all in a single pass across the surface 14. The diffractive optical element 20 alters the phase relationship of the beam 15 such that the lens 22 sees at least two beams 16 with an angle to the lens 22 face. This makes the lens 22 produce a number of focus spots 24 and 26 corresponding to the number of beams 16 which it receives. Since the diffractive element 20 can precisely alter the phase relationships of the beam 15 the separation of the focus spots 24 and 26 can be fixed in a repeatable and predictable manner.

The cost of a diffractive optical element 20 is a few thousand dollars. It also retrofits into existing engraving equipment, since it is compatible with most engraving systems 10. In addition, improvements in the efficiency of the engraving/re-engraving process of at least about 30% have been observed. The diffractive element 20 in combination with the focusing lens 20 adds no apparent distortions to the two focus spots 24 and 26, maintaining good cell 12 symmetry.

The quality of the engraving provided by the use of a diffractive optical element 20 in the optical device 30 for splitting beam 15 into multiple beams 16 is significantly improved as compared with other re-engraving technology. Three improved aspects of re-engraving with the optical system 30 are smoothing of the cell 12 walls and recast, better geometric definition of the cell 12 shape and increased cell 12 depth. Cell 12 depth is increased because the second foci 26 is able to focus below the surface 14 into the previous engraved cell 12. In addition, beam 15 splitting with a diffractive optical element 20 provides a higher energy in each of the split beams 16 as compared to prior art optical beam 15 splitters, due to the efficiency of the diffractive,optical element 20. This makes it possible to increase the speed of the engraving operation thereby significantly improving productivity.

Preferably the diffractive optical element 20 is designed to split the beam 15 into more than two beams 16. In such a preferred arrangement, for every split beam 16 for engraving a new cell 12 there is provided another split beam 16 for re-engraving a previously engraved cell 12.

In accordance the invention, a process is provided for engraving a liquid transfer cylindrical roll to provide on at least a portion of a surface 14 of the roll 36 a plurality of spaced-apart engraved cells 12. A laser beam 15 is generated, preferably as a pulsed laser beam. The laser beam 15 is split into at least two beams 16, with each of the beams 16 forming a focused spot 24 or 26 at the surface 14. The focused spots 24 and 26 are spaced apart from each other. The beams 16 generally form beam pairs with each pair of the beams being arranged to simultaneously engrave a new cell 12 with the focused spot 24 of a first of the beam pair 16 and re-engraving a previously engraved cell 12 with the focused spot 26 of a second of the beam pair 16. The splitting of the original laser beam 15 is accomplished by passing it through an optical device 30 having a diffractive optical element 20 to form at least, the first beam and the second beam, having the spaced apart focused spots 24 and 26. The process employs the split beams 16 to engrave and re-engrave a plurality cells 12 in the surface of the article. Preferably the process is computer controlled so that appropriate relative movement is provided between the surface 14 of the roll 36 and the beams 16 to provide the desired array of cells 12 about the surface 14. Any desired computer controller and its associated software as are known in the engraving art can be used.

In a further preferred embodiment more than two beams 16 are formed so that for every split beam which is engraving a new cell there is another split beam which is re-engraving a previously engraved cell. The processes of this invention are particularly useful for making liquid transfer rolls 36 which have numerous applications as described above.

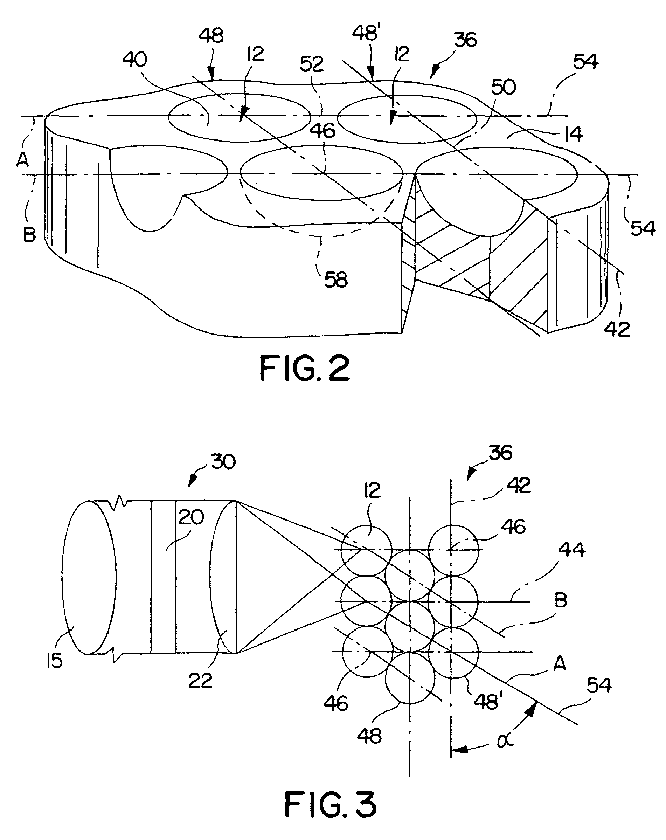

Referring now to Figs. 2 and 3 in accordance with the invention, each cell 12 defines an opening 40 in the surface 14 of the roll 36 having a first central axis 42 and a second central axis 44 normal to the first axis, the axes intersecting at a center axis point 46. In this embodiment the engraving step comprises engraving the cells 12 arranged in at least two rows 48, in which a line drawn through the first axes 42 of the cells 12 in one row 48 is substantially parallel to a line drawn through the first axes 42 of the cells in an adjacent row 48'. At least a portion and preferably all of the cells 12 in a row 48 each have their second axes 44 aligned between the second axes 44 of two spaced-apart cells 12 in an adjacent row 48'.

Preferably the length of the non-engraved space 50 between two cells 12 in a row 48 or 48' along a line containing their first axes 42 is between 1 to 1.3 times the length of a non-engraved space 52 between one of the cells 12 in the row 48 and an adjacent cell in an adjacent row 48', along a line 54 containing the center axis points 46 of the cells 12. Also preferably the cells 12 are aligned so that a line 42 drawn through the center axis points 46 of a cell 12 in one row 48 and a line 54 drawn through the center axis points 46 of a cell in one row 48 and an adjacent cell 12 in an adjacent row 48' forms an angle α of 0° to 90° with a line drawn parallel to a longitudinal axis of the cylindrical article. Advantageously angle α is between greater than 0° and less than 90°. Most advantageously the angle is between greater than 60° and less than 90°. The axis 42 lies parallel to the roll 36 axis. The angle α is usually referred to as a screen angle.

In a particularly preferred embodiment the cells 12 are arranged substantially equally distant from each other and the length of the non-engraved spacing 50 between two cells 12 in a row 48 along a line containing their first axes 42 is substantially equal to the length of the non-engraved space 52 between one of the cells 12 in row 48 and an adjacent cell 12 in an adjacent row 48' along a line containing the center axis points 46 of the cells 12.

Referring to Figs. 1-3 and Fig. 3 in particularly, the lines 54 are divided into a sequence of "A" and "B" lines as shown. A "B" line 54 appears on each side of an "A" line 54 and visa versa. Four focus spots 24 or 26 can be provided by diffractive element 20. Such a diffractive element has been successfully employed in an alternative preferred embodiment of the process and apparatus 10. In the four focus spots process and apparatus 10 two focus spots 24 are used to engrave cells 12 and two focus spots 26 are used to re-engrave cells 12. In this preferred embodiment the controller 32 is programmed to accommodate two engraving spots 24, one engraving only the "A" lines and the other for engraving only the "B" lines. Similarly the two re-engraving spots 26 are arranged with one engraving only the "A" lines and the other for engraving only the "B" lines. For example, the four spot diffractive element 20 can take advantage of this configuration by having the first and third spots 24 engrave the "A" and "B" lines and the second and fourth spots 26 re-engrave these lines. This has the advantage of doubling the speed of the engraving process while retaining the improvements provided by this invention. Six and eight spot diffractive elements 20 using this approach could yield three and four times engraving speed enhancements provided the laser generator 18 is capable of generating sufficient power for all the focus spots 24 and 26.

Because the diffractive element 20 is a single optical element with similar dimensions to the focusing lens 22, few if any modifications to the optical system 30 are required for its use. This makes it compatible with nearly any existing engraving system 10 and easily retrofitable into such systems. While one diffractive element 20 is preferably employed in the optical system 30 multiple diffractive elements could be employed if desired. The diffractive optical element 20 is mounted just behind the focusing lens 22 between the lens 22 and the beam generator 18. The position of the two focus spots 24 and 25 can be aligned with the engraving patterns by rotating the diffractive optical element 20 and the focusing lens 22 in a common lens assembly (not shown). The separation of the two focus spots 24 and 26 is dependent on the design of the diffractive element 20 and the focal length of the lens 22. The equation for calculating the separation is as follows:

$$H = F \tan \theta$$

Where H is the half angle separation, F is the focal length of the lens and θ is the diffractive angle designed into the diffractive optical element 20.

For the conventional engraving of anilox liquid transfer rolls 36 there are three cell 12 patterns that are commonly used, namely, those with screen angles α equaling 30°, 45° and 60°. The Lines Per Centimeter (LPC) or screen count, is determined by counting the number of cells 12 that lie along the specified screen angle α. The computer 32 calculates the number of cells 12 that will fit around the roll's (36) circumference based upon input data comprising the: roll 36 diameter, screen angle α and LPC. The controller 32 calculates the positions for two complete rows 54 of cells 12 around the roll's (36) circumference. These rows or lines 54 have been previously noted as the "A" and "B" lines. When the first row of cells, the "A" line, is produced, the computer 32 advances the position of the optical system 30, to position the next row of cells, the "B" line, so as not to overlap the previous "A" line of engraving. By shifting the position of the "B" line with respect to the "A" line around the roll's (36) circumference, and advancing the optical system 30 less than a full cell 12 width, the two lines "A" and "B" are interlocked producing a pattern similar to that of a honeycomb as shown in Fig. 2. This process of advancing the optical system 30 position and alternating between the position of the "A" line and "B" line is repeated down the axial 56 length of the roll 36. The computer can alter the spacing 50 or 52 of the cells 12 about the circumference and along the roll 36 axis 56 to produce the desired LPC and screen angle α.

In accordance with a preferred embodiment of this invention, which employs at least two focus spots 24 and 26 produced by the optical system 30, the spots 24 and 26 are preferably aligned parallel with the "A" and "B" lines or most preferably parallel with the roll 36 axis 56. The two spots 24 and 26 produced by the diffractive element 20 rotate about a point which lies between the two spots. The two spots 24 and 26 are located 180 degrees apart from each other. The diffractive element 20 may be rotated slightly in an attempt to align the second or lagging spot 26 directly in the middle of cells 12 produced by the first or leading spot 24 so that one spot 24 is engraving material's virgin surface 14 and the second spot 26 is engraving the previously engraved cells.

With the two spots nearly parallel with the "A" and "B" lines, rotating the diffractive element 20 a few tenths of a degree moves the spots more along the roll axis 56. Changing the LPC moves the cell 12 placement more along the roll's (36) circumference. By combining rotation of the diffractive element 20 and changing the LPC, it is possible to position the lagging spot 26 directly in the middle of previously engraved cells 12, producing the desired re-engrave effects of this invention.

The optical system 30 is compatible with any controller 32 used for the engraving of liquid transfer rolls 36 because they all employ similar process techniques to generate the desired cell 12 patterns. However, because the separation between the spots 24 and 26 are fixed, computers 32 that are capable of generating these patterns with high degrees of accuracy and consistency in the placement of the cells 12 are preferred to ensure the second spot 26 remains centered on previously engraved cells 12 throughout the engraving of the roll 36.

Most preferably the spots 24 and 26 are aligned with the axis 56 of roll 36. For example, for an engraved cell 12 pattern having a 60° screen angle α the relationship of the line 54 count to the relative advance between the surface 14 and the beams 16 along the roll axis 56 can be expressed as:

cosine α = the amount of the advance along the roll 36 axis 56 divided by the line count.

For example, if the engraving is a 60° α and 200 LPC pattern, cos 60 = 0.5 and the number of lines along the roll axis is 100 LPC. That means that if engraving were done with two focus spots 24 and 26 separated by about 1mm, and the two spots 24 and 26 were aligned along the roll axis 56, not the screen angle α, the first spot 24 would engrave virgin surface 14 while the second spot 26 would re-engrave cells 12 ten lines 44 behind the first spot 24 following the same pattern. Aligning the two spots 24 and 26 to the roll axis 56 rather than the screen angle α means that the separation between them can remain fixed for all line 54 counts and screen angles α, provided that the advance is calculated and rounded for each angle. The ten line 44 axial gap between the first and second hits on a cell 12 increases the cooling time of the cell 12 between the hits which improves the esthetics of the cell 12.

Alternatively if the engraving is a 45° α and 200 LPC pattern, the number of lines 44 along the roll axis 56 is 141.4 LPC, (cos 45° = 0.707). If the advance is rounded to the nearest even number of LPC, 140, and calculated back, the actual LPC to make the 1mm separation work at 45 degrees is 198. (An error of 1%). The same mathematical process can be used for 30° α engravings.

Advantageously the separation between the focus points 24 and 26 is from about 0.1mm (millimeter) to about 25mm and most advantageously from about 0.5mm to about 5mm. About a 1mm separation between the focus points 24 and 26 has been found to work well. Because the second spot 26 will increase the depth of the previously engraved cells 12, it will be necessary during set up to measure the results in a test band area. A focus point 24 to 26 separation of about 1mm or less will minimize the amount of test band required. A different diffractive element 20 must be used for each focal length of lens 22 used since the spot 24 to 26 separation is a function of focal length.

In order to illustrate a preferred embodiment of this invention a diffractive element 20, 2.8 cm (1.1 inches) in diameter was obtained. When the diffractive element 20 was placed along the beam 15 axis 34, behind the lens 22 having a focal length (FL) of 1.5 inches (3.8cm) as shown in Fig. 1, two focused points 24 and 26 were produced by the lens 22. The diffractive element 20 or binary grating preferably had a grating period of 812 $\pm$ 1$\mu$m, which for an $f$ = 3.8 cm (1.5") focusing lens 22 and a laser beam 15 wavelength of 10.6$\mu$ m, translates into a 0.995mm separation between the +1 and the -1 order beams 16 at the focus points 24 and 26. Advantageously the laser beam 15 has a wavelength between about 0.1$\mu$m and about 15$\mu$m. The target depth of the slits 38 for the grating 20 was 1.77$\mu$m $\pm$ 0.089$\mu$m ($\pm$5%). In this example a depth of 1.83$\mu$m was obtained. The etch uniformity across the 2.8 cm (1.1") diameter diffractive element 20 was about $\pm$ 1%. The diffractive element was AR/AR V (antireflective) coated at 10.6$\mu$m. The diffractive element 20 of this example is for use with a laser beam having a wavelength equal to 10.6$\mu$m produced by carbon dioxide laser generator 18. Preferably the diffractive optical element is formed of a material which is transparent to the laser beam 15. In this example the diffractive was made of germanium in order to satisfy this requirement. The diffractive optical element 20 produced in accordance with this example had an efficiency of 80% and produced cells 12 exhibiting all the characteristics of re-engraved cells 12.

The preferred diffractive 20 used in this example was made of germanium because the crystalline structure is more dense. The micro-structure of this material is better defined thereby producing less scatter or power loss to the primary focus spots 24 and 26. Similar diffractive structures can be etched into other far infrared materials such as zinc selenide.

This engraving technique can also be applied to Neodymium Yttrium Aluminum Garnet lasers, or Nd:YAG, that are becoming more commonly used for the engraving of liquid transfer rolls 36. This laser produces a beam 15 of light with a wavelength of 1.06$\mu$m requiring the diffractive 20 to be manufactured of materials transparent to this wavelength, such as quartz or synthetic quartz, commonly referred to as fused silica. It should be possible to apply this engraving technique to any desired laser beam 15 wavelength considered for engraving liquid transfer rolls 36, provided a suitable transparent material, that can support the necessary diffractive structures, which are etched or milled into the materials surface, can be found.

The diffractive element of this example was separated from the focus lens by a 2mm spacer. The assembly was rotated to align the first order spots 24 and 26 with the axis 56 of the roll 36. The optical system 30 produced two first order focus spots 24 and 26 separated by about 995 microns. The intensity distribution between the two first order spots 24 and 26 was about 50/50.

Cell 12 pattern engravings were produce at 180 LPC and lower with excellent engraving quality. The re-engraved cells 12 showed an increase in cell 12 depth 58 as in Fig. 2 of about 18%, which should improve engraving speeds. There appeared to be no aberration introduced by the diffractive optical element. The efficiency of the optical system 30 was measured to be approximately 90%. Approximately 10% of the beam 15 energy is directed into second order spots which do not participate in the engraving process.

The optical system 30 of this example was designed to align the first order focus spots 24 and 26 from one "A" line to the next. This meant that the combinations of line counts must be odd multiples, 1, 3, 5, 7. At a 1mm spot 24 to 26 separation this equates to achievable line counts for a 60° α engraving of 60, 100, 140 LPC. Reducing the spot 24 to 26 separation reduces the line count resolution. Therefore, 1mm was preferably used to minimize spot separation and maintain appropriate resolution.

The surface 14 of the roll 36 preferably has a ceramic, metallic or cermet coating which is engraved in accordance with this invention. Suitable ceramic, metallic and cermet coatings, such as refractory oxide or metallic carbide coating, may be applied to the surface of the roll 36. For example, tungsten carbide-cobalt, tungsten carbide-nickel, tungsten carbide-cobalt chromium, tungsten carbide-nickel chromium, chromium-nickel, aluminum oxide, chromium carbide-nickel chromium, chromium carbide-cobalt chromium, tungsten-titanium carbide-nickel, cobalt alloys, oxide dispersion in cobalt alloys, alumina-titania, copper based alloys, chromium based alloys, chromium oxide, chromium oxide plus aluminum oxide, titanium oxide, titanium oxide plus aluminum oxide, iron based alloys, oxide dispersed in iron based alloys, nickel and nickel based alloys, and the like may be used. Preferably chromium oxide ($Cr_2O_3$), aluminum oxide ($Al_2O_3$), silicon oxide or mixtures thereof could be used as the coating material, with chromium oxide being the most preferred.

The preferred metallic carbide coatings can be applied to the metal surface of the roll by any well known technique; for example, the detonation gun process, the plasma coating process, the high velocity oxyfuel process or thermal spray coating in general. The detonation gun process is well known and fully described in U.S. Patent Nos. 2,714,563; 4,173,685; and 4,519,840. Conventional plasma techniques for coating a substrate are described in U.S. Patent Nos. 3,016,447; 3,914,573; 3,958,097; 4,173,685; and 4,519,840. The thickness of the coating applied by either the plasma process or the detonation gun process can range from 0.323 to 64,5 mm$^2$ (0.5 to 100 mils) and the roughness ranges from about 50 to about 1000 R$\alpha$ depending on the process, i.e. detonation gun or plasma, the type of coating material, and the thickness of the coating.

The ceramic or metallic carbide coating on the roll can be preferably treated with a suitable pore sealant such as an epoxy sealant. One such sealant is UCAR 100 epoxy available from Praxair Surface Technologies, Inc. (UCAR is a trademark of Union Carbide Corporation). The treatment seals the pores to prevent moisture or other corrosive materials from penetrating through the ceramic or metallic carbide coating to attack and degrade the underlying steel structure of the roll.

It should be understood that the foregoing description is only illustrative of the invention. Various alternatives and modifications can be devised by those skilled in the art without departing from the spirit of the invention. Accordingly, the present invention is intended to embrace all such alternatives, modifications and variances which fall within the scope of the appended claims.

**Claims**

1. A process of engraving a liquid transfer cylindrical roll (36) to provide on at least a portion of a surface (14) of the roll a plurality of spaced-apart engraved cells (12) comprising:

   generating a laser beam (15);

   wherein each cell (12) defines an opening in the surface (14) of the roll (36) having a first central axis (42) and a second central axis (44) normal to said first axis, said axes intersecting at a center axis point (46);
   wherein said engraving step comprises engraving said cells arranged in at least two rows (48, 48'), in which a line drawn through the first axes of the cells in one row is substantially parallel to a line drawn through the first axes of the cells in an adjacent row; and
   wherein at least a portion of the cells in a row each have their second axes aligned between the second axes of two spaced-apart cells in an adjacent row;wherein the length of a non-engraved spacing (52) between two cells (12) in a row (48) along a line containing their first axes is between 1 to 1.3 times the length of a non-engraved spacing between one of said cells in said row and an adjacent cell in an adjacent row (48'), along a line (54) containing the center axis points (46) of the cells; and
wherein the cells (12) are aligned so that a line drawn through the center axis point (46) of a cell in one row (48) and through a center axis point of an adjacent cell in an adjacent row (48') forms an angle ($\alpha$) of between greater than 0° and less than 90° with a line drawn parallel to a longitudinal axis of the cylindrical roll;
**characterized in that** the process further comprises:

   splitting said laser beam into at least two beams (16), with each of said beams forming a focused spot (24, 26) at said surface, said focused spots being spaced apart from each other, said beams generally forming beam pairs with each pair of said beams being arranged for simultaneously engraving a new cell with said focused spot of a first of said beam pair and re-engraving a previously engraved cell with said focused spot of a second of said beam pair, said splitting step comprising passing said laser beam through an optical device having a diffractive optical element (20) to form at least said first beam and said second beam having said spaced apart focused spots; and
   engraving and re-engraving a plurality of cells (12) in the surface of the roll.

2. The process of claim 1 wherein more than two beams (16) are formed such that for every split beam which is engraving a new cell (12) there is another split beam which is re-engraving a previously engraved cell.

3. The process of claim 1 wherein the angle ($\alpha$) is between greater than 60° and less than 90°.

4. The process of claim 1 wherein said laser beam (15) has a wavelength of 0.1 $\mu$m to 15 $\mu$m.

5. A apparatus for engraving a solid article (36) to provide on at least a portion of a surface (14) of the article a plurality of spaced-apart engraved cells (12) and for carrying the process according to one of the claims 1 to 4 comprising:

   a laser beam generator (18) for generating a laser beam (15);

   **characterized in that** the apparatus further comprises:

an optical device (30) having a diffractive optical element (20) for splitting said laser beam into at least two beams (16), with each of said beams forming a focused spot (24, 26) at said surface, said focused spots (24, 26) of said beams being spaced apart from each other, said beams generally forming beam pairs with each pair of said beams being arranged for simultaneously engraving a new cell (12) with said focused spot of the first of said beam pair and re-engraving a previously engraved cell (12) with said focused spot of the second of said beam pair;

means (28, 29) for relatively moving the laser beam focus points (24, 26) and said surface (14) so as to arrange the beams for simultaneously engraving a new cell (12) with said focused spot (26); and

means (32) for employing said at least two beams for engraving and re-engraving a plurality cells (12) in the surface of the article (36).

6. The apparatus of claim 5 wherein said optical device (30) provides more than two beams (16) and for every split beam for engraving a new cell (12) there is provided another split beam for re-engraving a previously engraved cell (12).

7. The apparatus of claim 5 in combination with the article wherein said article (36) is a liquid transfer cylindrical roll (36).

**Patentansprüche**

1. Verfahren zum Gravieren einer zylindrischen Flüssigkeitstransferwalze (36), um mindestens einen Teil einer Oberfläche (14) der Walze mit einer Mehrzahl von in Abstand angeordneten gravierten Zellen (12) zu versehen, wobei im Zuge des Verfahrens:

ein Laserstrahl (15) erzeugt wird;

wobei jede Zelle (12) eine Öffnung in der Oberfläche (14) der Walze (36) bestimmt, die einer erste Zentralachse (42) und eine zweite Zentralachse (44)normal zu der ersten Achse aufweist, wobei sich die Achsen an einem Zentralachsenpunkt (46) schneiden; wobei im Zuges des Gravierens die Zellen so graviert werden, dass diese in mindestens zwei Reihen (48, 48') angeordnet sind, in welchen eine durch die ersten Achsen der Zellen in einer Reihe gezogene Linie im wesentlichen parallel zu einer Linie verläuft, die durch die ersten Achsen der Zellen in einer benachbarten Linie gezogen wurde; und wobei bei mindestens einem Teil der Zellen in einer Reihe die zweiten Achsen zu den zweiten Achsen der beiden in Abstand angeordneten Zellen in einer benachbarten Reihe ausgerichtet sind; wobei die Länge eines nicht gravierten Abstands (52) zwischen zwei Zellen (12) in einer Reihe (48) entlang einer Linie, welche deren erste Achsen enthält, zwischen den 1 bis 1,3-fachen der Länge eines nicht gravierten Abstands zwischen einer der Zellen in einer Reihe und einer benachbarten Zelle in einer benachbarten Reihe (48) entlang einer Linie (54) entspricht, welche die Zentralachsenpunkte (46) der Zellen enthält; und wobei die Zellen (12) so ausgerichtet sind, dass eine durch den Zentralachsenpunkt (46) einer Zelle in einer Reihe (48) sowie durch einen Zentralachsenpunkt einer benachbarten Zelle in einer benachbarten Reihe (48') gezogene Linie zu einer parallel zu einer Längsachse der zylindrischen Walze gezogenen Linie einen Winkel ($\alpha$) bildet, der größer 0° und kleiner als 90° ist;

**dadurch gekennzeichnet, dass** im Zuge des Verfahrens ferner:

der Laserstrahl in mindestens zwei Laserstrahlen (16) geteilt wird, wobei jeder der Strahlen einen fokussierten Punkt (24, 26) auf der Oberfläche bildet, wobei die fokussierten Punkte in Abstand zueinander liegen und die Strahlen im allgemeinen Strahlpaare bilden, wobei jedes Strahlpaar so ausgelegt ist, dass mit dem fokussierten Punkt eines ersten Strahls des Strahlpaars eine neue Zelle graviert wird und simultan mit dem fokussierten Punkt eines zweiten Strahls des Strahlpaars eine zuvor gravierte Zelle erneut graviert wird, wobei im Zuge des Teilens der Laserstrahl durch eine optische Vorrichtung geführt wird, die ein diffraktives optisches Element (20) aufweist, um mindestens den ersten Strahl und den zweiten Strahl mit den in Abstand liegenden fokussierten Punkten zu bilden; und

eine Mehrzahl von Zellen (12) in der Oberfläche der Walze graviert und erneut graviert werden.

2. Verfahren gemäß Anspruch 1, bei welchem mehr als zwei Strahlen (16) so erzeugt werden, dass es für jeden geteilten Strahl, mit dem eine neue Zelle (12) graviert wird, einen weiteren geteilten Strahl gibt, der eine zuvor gravierte Zelle erneut graviert.

3. Verfahren gemäß Anspruch 1, bei welchem der Winkel ($\alpha$) zwischen größer als 60° und kleiner als 90° liegt.

4. Verfahren gemäß Anspruch 1, bei welchem der Laserstrahl eine Wellenlänge zwischen 0.1 $\mu$m und 15$\mu$m hat.

5. Vorrichtung zum Gravieren eines festen Gegenstandes (36), um mindestens einen Teil der Oberfläche (14) des Gegenstands mit einer Mehrzahl von in Abstand angeordneten gravierten Zellen (12) zu versehen, und zum Ausführen des Verfahrens gemäß einem der Ansprüche 1 bis 4, versehen mit:

einem Laserstrahlerzeuger (18) zum Erzeugen eines Laserstrahls (15);

**dadurch gekennzeichnet, dass** die Vorrichtung ferner versehen ist mit:

einer optischen Vorrichtung (30) mit einem diffraktiven optischen Element (20) zum Teilen des Laserstrahls in mindestens zwei Strahlen (16), wobei jeder der Strahlen auf der Oberfläche eine fokussierte Stelle (24, 26) bildet, wobei die fokussierten Stellen (24, 26) der Strahlen in Abstand zueinander liegen und die Strahlen im wesentlichen Strahlpaare bilden, wobei jedes Strahlpaar so ausgelegt ist, dass gleichzeitig mit der fokussierten Stelle eines ersten Strahls des Strahlpaars eine neue Zelle graviert wird und mit der fokussierten Stelle des zweiten Strahls des Strahlpaars eine zuvor gravierte Zelle (12) erneut graviert wird;

einer Anordnung (28, 29), um die Laserstrahlfokussierungsstellen und die Oberfläche relativ zueinander zu bewegen, um so die Strahlen für ein gleichzeitiges Gravieren einer neuen Zelle (12) mit der fokussierten Stelle (26) anzuordnen; und

einer Anordnung (32), um die mindestens zwei Strahlen zum Gravieren und erneuten Gravieren einer Mehrzahl von Zellen (12) in der Oberfläche des Gegenstands (36) einzusetzen.

6. Vorrichtung gemäß Anspruch 5, bei welcher die optische Vorrichtung (30) mehr als zwei Strahlen (16) bereitstellt, und es für jeden Teilstrahl zum Gravieren einer neuen Zelle (12) einen weiteren Teilstrahl zum erneuten Gravieren einer zuvor gravierten Zelle (12) gibt.

7. Vorrichtung gemäß Anspruch 5 in Kombination mit dem Gegenstand, wobei der Gegenstand (36) eine zylindrische Flüssigkeitstransferwalze (36) ist.

**Revendications**

1. Procédé de gravure d'un rouleau cylindrique (36) de transfert de liquide pour produire sur au moins une partie d'une surface (14) du rouleau plusieurs cellules gravées espacées (12) comprenant :

la génération d'un faisceau laser (15) ;

dans lequel chaque cellule (12) définit une ouverture dans la surface (14) du rouleau (36) ayant un premier axe central (42) et un second axe central (44) normal audit premier axe, lesdits axes se croisant en un point axial central (46) ;

dans lequel ladite étape de gravure comprend la gravure desdites cellules agencées dans au moins deux rangées (48, 48'), dans lesquelles une ligne tracée de façon à passer par les premiers axes des cellules situées dans une rangée est sensiblement parallèle à une ligne tracée de façon à passer par les premiers axes des cellules dans une rangée adjacente ; et dans lequel au moins une partie des cellules dans une rangée ont toutes leurs seconds axes alignés entre les seconds axes de deux cellules espacées dans une rangée adjacente ; dans lequel la longueur d'un espace non gravé (52) entre deux cellules (12) dans une rangée (48) suivant une ligne contenant leurs premiers axes est comprise entre 1 et 1,3 fois la longueur d'un espace non gravé entre l'une desdites cellules dans ladite rangée et une cellule adjacente dans une rangée adjacente (48'), suivant une ligne (54) contenant les points axiaux centraux (46) des cellules ; et

dans lequel les cellules (12) sont alignées de façon qu'une ligne tracée de manière à passer par le point axial central (46) d'une cellule dans une rangée (48) et par un point axial central d'une cellule adjacente dans une rangée adjacente (48') forme un angle ($\alpha$) compris entre plus de 0° et moins de 90° avec une ligne tracée parallèlement à un axe longitudinal du rouleau cylindrique ;

**caractérisé en ce que** le procédé comprend en outre :

la division dudit faisceau laser en au moins deux faisceaux (16), chacun desdits faisceaux formant un spot focalisé (24, 26) à ladite surface, lesdits spots focalisés étant espacés les uns des autres, lesdits faisceaux formant généralement des paires de faisceaux, chaque paire desdits faisceaux étant agencée pour graver simultanément une nouvelle cellule avec ledit spot focalisé d'un premier des faisceaux de ladite paire et pour regraver une cellule précédemment gravée avec ledit spot focalisé d'un second desdits faisceaux de ladite paire, ladite étape de division comprenant le passage dudit faisceau laser à travers un dispositif optique ayant un élément optique diffractif (20) pour former au moins ledit premier faisceau et ledit second faisceau ayant lesdits spots focalisés espacés ; et

la gravure et la regravure de plusieurs cellules (12) dans la surface du rouleau.

2. Procédé selon la revendication 1, dans lequel plus de deux faisceaux (16) sont formés de manière que, pour chaque faisceau divisé qui grave une nouvelle cellule (12), il y ait un autre faisceau divisé qui regrave une cellule précédemment gravée.

**3.** Procédé selon la revendication 1, dans lequel l'angle (α) est compris entre plus de 60° et moins de 90°.

**4.** Procédé selon la revendication 1, dans lequel ledit faisceau laser (15) a une longueur d'onde de 0,1 μm à 15 μm.

**5.** Appareil pour graver un article solide (36) afin de produire sur au moins une partie d'une surface (14) de l'article plusieurs cellules gravées espacées (12) et pour exécuter le procédé selon l'une des revendications 1 à 4, comportant :

un générateur (18) de faisceau laser destiné à générer un faisceau laser (15) ;

**caractérisé en ce que** l'appareil comporte en outre :

un dispositif optique (30) ayant un élément optique diffractif (20) destiné à diviser ledit faisceau laser en au moins deux faisceaux (16), chacun desdits faisceaux formant un spot focalisé (24, 26) à ladite surface, lesdits spots focalisés (24, 26) desdits faisceaux étant espacés l'un de l'autre, lesdits faisceaux formant généralement des paires de faisceaux, chaque paire desdits faisceaux étant agencée pour graver simultanément une nouvelle cellule (12) avec ledit spot focalisé du premier des faisceaux de ladite paire et pour regraver une cellule précédemment gravée (12) avec ledit spot focalisé du second des faisceaux de ladite paire ;
des moyens (28, 29) pour déplacer relativement les points de focalisation (24, 26) des faisceaux laser et ladite surface (14) afin d'agencer les faisceaux pour graver simultanément une nouvelle cellule (12) avec ledit spot focalisé (26) ; et
des moyens (32) destinés à utiliser lesdits, au moins deux, faisceaux pour graver et regraver plusieurs cellules (12) dans la surface de l'article (36).

**6.** Appareil selon la revendication 5, dans lequel ledit dispositif optique (30) produit plus de deux faisceaux (16) et, pour chaque faisceau divisé pour graver une nouvelle cellule (12), il est prévu un autre faisceau divisé pour regraver une cellule précédemment gravée (12).

**7.** Appareil selon la revendication 5 en combinaison avec l'article, dans lequel ledit article (36) est un rouleau cylindrique (36) de transfert de liquide.

FIG. I

FIG.2

FIG.3